Europäisches Patentamt

(19) **European Patent Office**

Office européen des brevets

(11) Publication number: **0 026 649**
**B1**

(12) **EUROPEAN PATENT SPECIFICATION**

(45) Date of publication of patent specification: **28.09.83**

(21) Application number: **80303387.7**

(22) Date of filing: **26.09.80**

(51) Int. Cl.³: **G 06 F 3/04, G 06 F 15/16**

(54) Digital information transfer system and interface.

(30) Priority: **26.09.79 US 79208**

(43) Date of publication of application:
**08.04.81 Bulletin 81/14**

(45) Publication of the grant of the patent:
**28.09.83 Bulletin 83/39**

(84) Designated Contracting States:
**CH DE FR GB IT LI NL SE**

(56) References cited:
FR - A - 2 309 011
FR - A - 2 344 073
FR - A - 2 382 719
FR - A - 2 440 058
US - A - 4 138 732

COMPUTER DESIGN, vol. 12, no. 7, July 1973,
Concord, US
BOUNDS: "Buffering high speed data for
minicomputer input", pages 69-73

(73) Proprietor: **SPERRY CORPORATION**
**1290, Avenue of the Americas**
**New York, N.Y. 10019 (US)**

(72) Inventor: **Fung, Anthony Kwok**
**16565, Mt. Michaelis Circle**
**Fountain Valley California 92708 (US)**

(74) Representative: **Michaels, Peter Albert**
**Sperry Univac Patent & Licensing Services M.S.**
**N1W4 Sperry Rand Ltd. Sperry Univac Centre**
**Brentfields**
**London NW10 8LS (GB)**

(56) References cited:
**MICROPROCESSORS AND THEIR
APPLICATIONS, fifth EUROMICRO symposium
on microprocessing and microprogramming,
August 28—30, 1979, Göteborg 1979 North
Holland Publishing Company,
Amsterdam, NL**
**DESHMUKH et al.: "A hierarchically structured
multi-microprocessor system", pages 317—327**

Courier Press, Leamington Spa, England

(56) References cited:

**MICROPROCESSORS AND THEIR APPLICATIONS, fifth EUROMICRO symposium on microprocessing, August 28—30, 1979, Göteborg 1979 North Holland Publishing Company, Amsterdam, NL.**
**MEZZALIRA et al.; "An approach to modular multimicroprocessor systems", pages 329—336**

**NACHRICHTENTECHNIK-ELEKTRONIK, vol. 29, no. 7, July 1979, Berlin, DE**
**TSCHELEBIEV et al.: "Speicherkopplung ungleicher Mikroprozessoren", pages 271—276**

## Digital information transfer system and interface

This invention relates to digital information transfer, and, in particular, provides an interface structure therefor.

In the past, in order for a mini computer to operate on one or more devices in the same controller, an extensive hardware and software configuration was necessary. In particular, a complete set of interfacing hardware was required for each device within the same controller. Each interface would usually have to include such integers as a command register, a data register, a direct memory access (DMA) data register, or a first in, first out (FIFO) device along with appropriate command decode circuitry and the like. In addition to being quite costly, this kind of interface apparatus was generally not very flexible in operation. The circuit operation did, moreover, not permit any chaining of commands.

Another configuration provided as data/DMA FIFO controlled by the mini computer bus and directed to the first device of the controller. The information from the first device was processed by the controller and at the end of the operation the FIFO resources were reassigned to the record device of the controller. This continued until all the operations relating to different devices were satisfactorily completed. The procedure was rather slow, and again did not provide great flexibility.

Another prior art approach involved the use of a dual port memory, between the mini computer bus and the controller, with information being entered by the mini computer on one port of the memory and information being taken out from the other part by the controller device. This approach did not allow the chaining of commands and DMA data, it was expensive to implement and an extensive memory was usually required.

Yet another prior art approach adopted the development of a first-in first-out device, in which various kinds of data were all stored in sequence. As a consequence, in order to remove or retrieve any selected data from this type of memory, it was essential and necessary to fetch all the commands and data which had been entered into the FIFO prior to the selected data. This mode of operating is clearly time consuming and requires a substantial amount of hardware/software.

U.S. patent 4,138,732, as explained in its abstract, discloses a data transfer control system for controlling data transfer between a processor and an input/output device. The system comprises a multilayer stack for temporarily storing transfer data, each as a first-in first-out stack or a last-in first-out stack, first and second up/down counters having a preset function and permitting any designated address at the stack to be varied; and first and second pointer registers for storing any initially designated address data which is stored in the counter. The first counter permits a direction of a count operation to be determined by the processor and the first pointer register has an initially designated address data stored therein by the processor. The second counter permits a direction of a count operation to be determined by the input/output device and the second point register has an initially designated address data stored therein by the input/output device. The direction of a data flow at the stack is varied dependent upon the direction in which the first and second counters effect count operations.

Another prior art system is disclosed in "Microprocessor and their Applications", fifth Euromicro Symposium on Microprocessing and Microprogramming, 28—30 August 1979, published by North Holland Publishing Company, Amsterdam, in an article by Deshmukh et al entitled "A hierarchically structured multiprocessor system, in pages 317 to 327. The article discloses an interface between two processors, one of which may be a microprocessor. The interface includes a so called scratch-pad memory for each direction of transfer. Each of the two scratch-pad memories can be addressed independently by both processors, simultaneous writing and reading at different locations being permitted.

One of the disadvantages of these kinds of interface has already been mentioned, namely that a large memory is required if large blocks of data are to be transferred at any one time.

The present invention as defined in claim 1 provides an interface structure which is capable of transferring information from an information supply apparatus such as a relatively high-speed computer, to an information retrieval apparatus such as a relatively low-speed microprocessor. The interface has a memory capable of storing a mixed chain of data and commands, supplied by the information supply apparatus. The information is retrieved from the memory by the information retrieval apparatus, which may itself be the controlling element in the information transfer to a plurality of devices. The interface includes two separate memory addressing circuits, one operated by the information supply apparatus, the other by the information retrieving apparatus, to select the address into which information is to be inserted, or from which it is to be retrieved.

The first memory addressing circuit is operated under the control of the information supply apparatus and is arranged to insert the information words in sequence into, usually successive, available memory locations in the form of a circular queue, that is to say, the memory addressing circuit will run through the available addresses, and, having arrived at the last available location, will return to the starting point, and continue again from there. The second addressing circuit is normally supplied with addresses by the information retrieving apparatus, and information retrieval will generally follow the sequence in which the information has been inserted. Additionally, the second circuit contains an address storage facility for repeatedly addressing the same location in the memory for both input and output of information, and without an address having to be supplied for each access by the information retrieval apparatus. This latter facility is used, for example, during DMA data transfer, with consecutive words of information being inserted into and retrieved from the same memory location.

The interface may further include information translation circuits which receive at least some of the digits of each word of information supplied to the memory and which, in response to the appropriate control signals, translate the information word or part of it into a form suitable for storage in the memory. This translation circuit may be arranged to operate, for instance, on supplied device addresses.

The present invention allows the setting up of an interface between a computer and a plurality of peripheral devices with only a small amount of extra hardware and software, if any, required compared to that needed in the aforedescribed prior art systems to interface each peripheral device. Alternatively, or additionally, the present invention provides for greater flexibility in operation.

In the following description of an embodiment in which the information supply apparatus is a mini computer, and the information retrieving apparatus is a microprocessor, the memory receives output information from the computer on a high-speed, essentially continuous basis. The microprocessor retrieves the information from the memory at its own operating speed and causes output controllers to be rendered operative in a suitable manner. The minicomputer operation is generally given priority over the microprocessor operation.

The present information will now be described further by way of an embodiment, and with reference to, the accompanying drawings, in which:—

Figure 1 is a block diagram of the present invention.

Figure 2 is a circuit diagram of the minicomputer output buffer interface portion of the block diagram of Figure 1.

Figure 3 is a circuit diagram of the information translation circuit of Figure 1.

Figure 4 is a memory map diagram of the system operation, and

Figure 5 is a circuit diagram of another version of the output buffer interface portion of Figure 2.

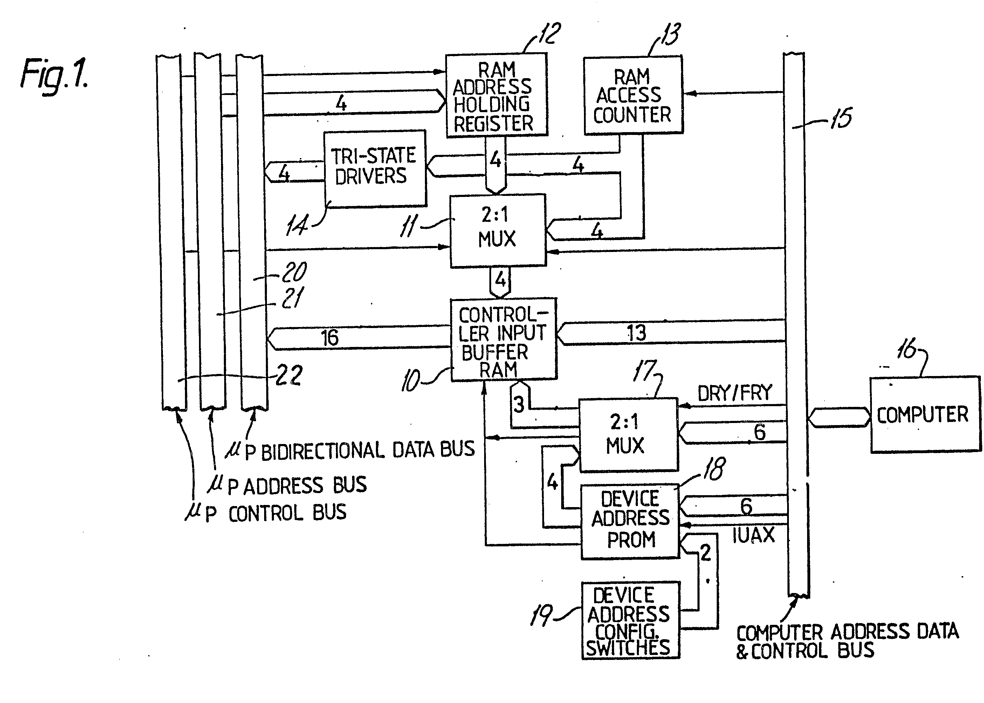

Referring now to Figure 1, there is shown a block diagram of an interface structure according to the present invention, between a computer 16 and an microprocessor ($\mu_p$). The

computer 16, assumed for the purpose of the ensuing explanation to be a Sperry Univac V70 minicomputer, has an address, data, and control bus 15. Of the microprocessor, assumed in the present example to be a Z80, only the bi-directional data bus 20, the address bus 21, and the control bus 22 are indicated in this Figure.

A random access memory unit (RAM) is provided, the size or storage capability of which will vary according to the intended utilization. In the instant application, the RAM 10 has a 16 × 16 configuration.

A multiplexer (MUX) 11 is arranged to provide address signals to the RAM 10, the output terminals of MUX 11 being connected to the address terminals of RAM 10. One of the sets of input signals supplied to the multiplexer 11 is provided by an address holding register 12 associated with the microprocessor. The other group of input signals is supplied to the MUX 11 by an access counter 13 associated with the minicomputer, and also to tristate drivers 14. The output terminals of the RAM 10 are connected to the microprocessor data bus 20, as are the output terminals of the tristate drivers 14.

The microprocessor address bus 21 is connected to supply signals to address holding register 12, while the minicomputer bus 15 is connected to supply control signals to the access counter 13.

The data and control bus 15 supplies information input signals to input terminals of the RAM 10 and, in addition, to a device address PROM 18 and to a multiplexer MUX 17. The signals supplied to the PROM 18 are control signal IUAX and device address bits from the E-bus. The IUAX signal is used to distinguish device address data on the V70 bus from direct memory access data. The PROM 18 operates upon the input signals, as appropriate, and supplies a set of translated device address signals to one set of input terminals of the 2:1 multiplexer MUX 17. The other set of input terminals of the multiplexer MUX 17 accepts nontranslated commands and data, and produces data signals as outputs which are supplied to the input terminals of the RAM 10. Depending upon the status of a control signal DRY/FRY (data ready/function ready) the MUX 17 may provide data signals directly to the RAM 10 from the bus 15.

In the illustrated embodiment, a set of device address configuration switches 19 are connected to a device address PROM 18. By changing the switch settings, the device address translation operation of the PROM 18 can be altered, thereby extending the capability of the circuit.

In a brief overview of the operation of the system shown in Figure 1, it is assumed that the minicomputer 16 provides data information to the RAM 10 via the minicomputer bus 15. Likewise, the microprocessor bus 20 retrieves data from the ram 10 in accordance with the address provided by the microprocessor along the address bus 21.

In a typical operation, the address information on the bus 21 is supplied to the register 12 where it is effectively stored and supplied to the MUX 11. If the MUX11 is switched to supply the signals from the register 12 to the address terminals of the RAM 10, the address signals from the bus 21 pass substantially directly through the register 12 and the MUX 11 to the address input terminals of the RAM 10. These signals select the location of the RAM 10, whose content is to be outputted to the bus 21. Likewise, the minicomputer information on the bus 15 is inserted into the memory location whose address is supplied by the access counter 13 which is also connected to the MUX 11. Inasmuch as the MUX 11 can only transmit addresses from either the counter 13 or the register 12, on a mutually exclusive basis, the operation of the MUX 11 will control the addressing of RAM 10. Thus, the MUX 11 will supply address signals to the RAM 10 from the register 12 except when signals are presented by the counter 13.

That is, inasmuch as minicomputer operation (as signified by activity on the bus 15) is given higher priority in the system operation, the minicomputer bus 15 also supplies a control signal PGMIO to the MUX 11 which will automatically cause the MUX 11 to transfer any address provided by the counter 13. Thus, when the MUX 11 is activated by counter information on the bus 15, the register 12 will be overriden and it will be the counter 13 which provides the address to the RAM 10.

This would make is possible that, during the retrieval of information from the RAM 10 to the bus 20, the minicomputer 16 addresses the RAM 10 and inserts information into it. In this situation the RAM 10 would become, essentially, transparent, and information would be transferred through it and to the microprocessor bus 20. To prevent this inaccurate data situation arising, the minicomputer access address in the counter 13 is stored in a temporary store via the bus 20 and the tri-state driver circuits 14 at the time the microprocessor begins an operation. When the data has been read on bus 20, the minicomputer address at the counter 13 is compared with the original minicomputer address previously stored. The original address, called the "image", will be the same if the minicomputer 16 has not performed an operation in the interim. If the image and the current minicomputer address are identical, the information previously fetched from the RAM 10 by the microprocessor will be considered as valid information. If, conversely, the image and the current address of the minicomputer are not identical because the minicomputer 16 has meanwhile performed an operation, the data previously fetched from the RAM 10 will be considered invalid, and the RAM data retrieval operation relative to bus 20 is repeated. The image and current address are again stored and compared. This operation continues until the comparison indicates that the minicomputer address is identical with the image, at which time the data is transferred from RAM 10 to bus 20 and, thence, to the ultimate utilisation device. Therefore, in the manner described above, an equivalent operation of a dual port memory has been implemented.

What has so far been described, is the method of controlling the access to the RAM 10, and the method of obtaining output signals from it. In order to store information in the RAM 10, the information is supplied from the bus 15 to the data input terminals of the RAM 10. These input signals are supplied from the V70 bus 15 (address, data and control bus) to the RAM 10 in the form of 13 bits of a word. As noted, the RAM 10 is a 16-bit memory, and the other 3-bits are supplied to it from the MUX 17, which controls the source of the other 3-bits. The MUX 17 is controlled by the DRY/FRY control signals referred to above, with the DRY signal indicating a "data ready" status, and the FRY signal indicating a "function ready" status. Depending upon the system status, the MUX 17 receives the appropriate control signal and correspondingly transfers signals to the other input terminals of the RAM 10.

In particular, the device address PROM 18 receives the six bits E00 through E05, which represent the device address bits. These six bits, in conjunction with the control signal, are translated into device address output signals as a function of the decoding by the PROM 18. These output signals are supplied to the MUX 17. As previously noted, the MUX 17 also receives the signals E01, 02 and 03 from bus 15. Depending upon the status of the FRY/DRY signals, the MUX 17 then supplies the signals from the bus 15 or from the PROM 18 to the other inputs of the RAM 10.

As mentioned above, the configuration switch circuitry 19 supplies additional control signals to the PROM 18, which permits the storage configuration to be altered, and thus the output signals supplied by the PROM 18. This circuitry has the advantage of expanding the capability of the system and permits the programming of different sets of translated device addresses.

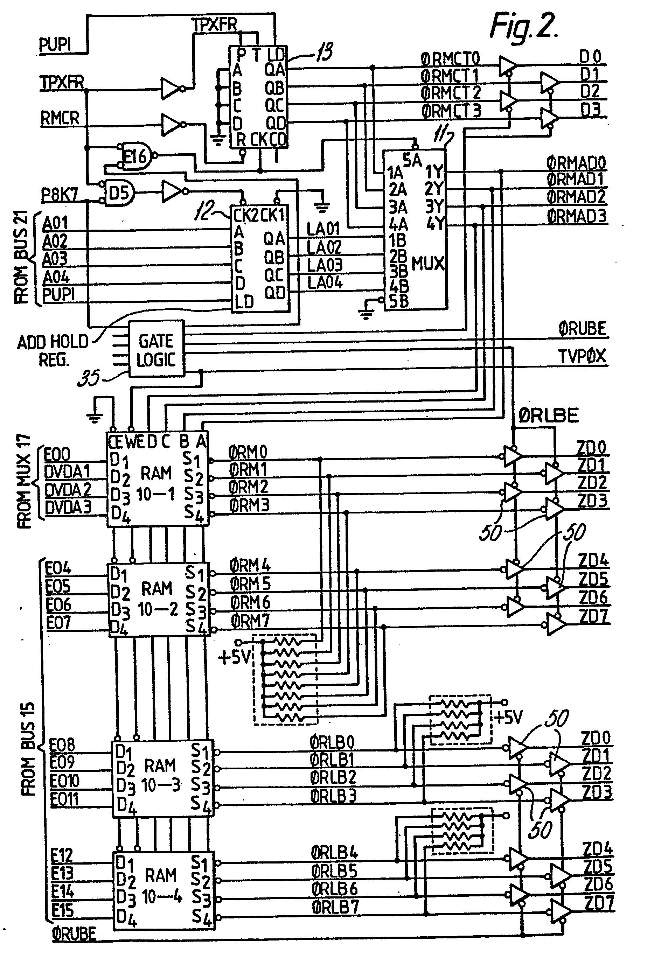

Figure 2 shows a more detailed block diagram of circuitry according to the present invention. As shown in Figure 2, the RAM 10 comprises of four memory devices, 10-1, 10-2, 10-3 and 10-4, each of which is a 4 × 16 RAM memory. This arrangement is employed to make use of existing devices. If desired, other numbers of memories or other memory configurations may be employed.

The address input terminals A, B, C, D, of each of the RAM cells are connected to the output terminals 1Y, 2Y, 3Y, 4Y of MUX 11. MUX 11 is a 2:1 type of multiplexer and operates as suggested with reference to Figure 1. The A-input terminals of MUX 11 are connected to counter 13, which is connected to bus 15 through gate logic 35, and in which the computer pointer is derived. Also, the same output terminals of address counter 13 are connected to the tristate drivers 14 to provide the pointer address which is used in the "image" checking process noted above. The B-input terminals of the MUX 11 are connected to the register 12, which is connected to the address bus 21, and which provides the microprocessor pointer. The control terminal 5A of the MUX 11 is connected to receive the control signal PMGIO which directs the multiplexer operation. That is, signal PMGIO determines when the inputs from register 13 is to be transferred through the MUX 11. The PMGIO signal is a function of the FRY signal (via gate logic 35) and the trap transfer signal TPFXR which indicates a DMA data transfer. The absence of both these permits the MUX 11 to transfer the register 12 signals to the RAM 10. The gate logic 35 operates on a plurality of input signals to effectively control the operation of the MUX 11, and to control the write enable (WE) operation of the RAM 10. Likewise the signals ORUBE and ORLBE from the gate logic 35 control the selection of upper and lower bytes of the "words" to be fetched from the RAM 10.

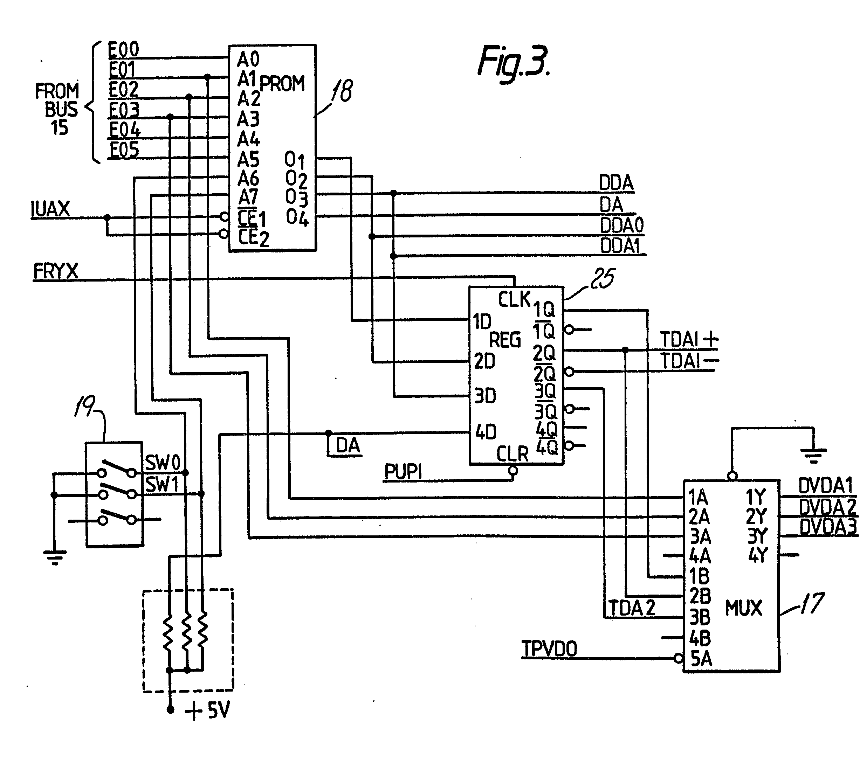

The output terminals S1—S4 of each of the RAM devices are connected to the microprocessor bus 20 via appropriate inverter drivers 50. The inversion is appropriate for the present embodiment, but not absolutely necessary in all applications of the invention. The input terminals of the RAM device 10-1 are connected to receive the signals E00 (from the bus 15) and DVDAI1—DVDA3 from the MUX 17 (see Figures 1 and 3). Thus, the signal E00 is supplied directly from the bus while the other signals are provided as a function of the operation of the MUX 17 and the PROM 18 as previously described in relation to Figure 1. The RAM devices 10-2, 10-3 and 10-4, receive the signals E04 and E15 directly from the bus 15 and operate thereon accordingly. That is, when appropriate, the input signals are written into the RAM devices by computer 16. Conversely, in the read mode, the contents of the RAM devices are read out as signal ZD0—ZD7 (either upper or lower byte as determined by the ORUBE or ORLBE signals).

Referring now to Figure 3, the register 25 is connected to receive the output signals from the PROM 18. These signals are supplied to the input terminals of the register 25 and comprise four signals. In addition, the register 25 receives the FRY signal at the clock terminal thereof, which, effectively, causes the register 25 to receive and latch the signals supplied to its input terminals and also to transfer the signals selectively to the output terminals. Only three of the output terminals are connected to the MUX 17. These connections provide the three input signals to the MUX 17, and hence to the RAM 10, when the system is in the function ready status. That is, the function ready (FRY) signal supplied to the register 25 permits appropriate signals to be transferred to the MUX 17 as a function of the PROM 18 output. The MUX 17 is selectively controlled by appropriate input signals at terminals 5A which specifies the system operation. Thus, the input information or word on the V70 bus 15 is translated in accordance with the contents of the PROM 18, and the translated signal is supplied to the RAM 10. In the absence of the FRY signal, i.e. when the system is in the DRY status, the register 25 is not selected and the signals from bus 15 are fed directly to MUX 17 and, through it, to the RAM 10.

The function ready signal (FRY) permits a function operation to occur, while the DRY signal produces only data to be transferred to the RAM 10. When a function signal or word is transferred to the RAM 10, the control signals (which are, in essence, signals E6 through E15) cause the machine to produce a function control as well as the transfer of data. The function control together with the device address (which are E00 through E05) will, inter alia, determine which peripheral equipment is to be operated. The peripheral equipment involved may be a diskette disc drive, magnetic tape drive and others. This information is stored in the RAM 10, and subsequently retrieved by the microprocessor in the manner described in relation to a control function operation.

This operation, as described above, is controlled by the microprocessor via the address holding register 12. The microprocessor supplies control signals to the MUX 11 which selects the address in the RAM 10 (in the absence of a FRY or DRY signal). On selection of an address in the memory RAM 10, the RAM contents are supplied to the bus 20 and the appropriate operation takes place.

One of the operating modes of the circular queue structure of the instant invention provides significant data compression. That is, while the circular queue structure is receiving command instructions from the V70 computer 16, it is possible for large portions of data stored in the V70 computer's memory to be read or transferred from the computer to the controller memory via the RAM 10 under the microprocessor control. The computer 16, by means of a WRITE-TO-DISK command, requests that a block of data be transferred from the memory of the V70 computer to the memory of the controller and then onto the disk (Direct Memory Access Method). The WRITE-TO-DISK command is chained up in the RAM 10. When the Z80 microprocessor finally processes this command, its location will be loaded into the address holding register 12. This fixes one location in the RAM 10 through which the entire block of memory from the V70 will be transferred. No RAM 10 memory location before or after the specific RAM 10 location will be distributed. Since the specific location in the RAM 10 previously contained the WRITE-TO-DISK command, which is processed before the transfer begins, the location is essentially re-used. In operation, the register 12 stores the address of the WRITE-TO-DISK command signal in the RAM 10 and the Z80 continues to access the RAM 10 via the MUX 11 at that address. As a consequence, the information which is supplied by the V70 DMA logic to the selected address, i.e. at the address to which the register 12 points, is read directly from the RAM 10 into the controller memory under Z80 control. In this manner, a large portion (e.g., a page of information) can be directly transmitted from the V70 computer to the controller memory without using any extra memory space of the memory RAM 10.

In illustrating this operation, it is assumed that a large amount of information in the computer memory is selected for transfer to the controller via the microprocessor. For example, it is assumed that a block of information comprising data words 0 to 1000 are to be transferred from the computer controller to the memory. Instead of immediately transferring each of these words from the computer 16 to a separate location in the RAM 10 and waiting until the Z80 can retrieve the information, a WRITE-TO-DISK command signal is stored in the RAM 10 at the next available location. The WRITE-TO-DISK command is then accessed and interpreted by the Z80 microprocessor.

The WRITE-TO-DISK commmand will, typically, include an instruction to read the words (0 to 1000 in the example given). Therefore, the memory in the V70 computer is serially accessed by the V70 DMA logic, and word 0 is fetched from, and stored in, the location of RAM 10 where the WRITE-TO-DISK command was previously located.

This information is then retrieved by the Z80 microprocessor. The word 1 is then transferred to the same location in RAM 10 and retrieved by the Z80 microprocessor. Next, the word 2 is transferred to the same location in RAM 10 and retrieved by the microprocessor Z80. This procedure continues, in seriatum until all of the words 0 through 1000 are transferred to the same location in RAM 10 and retrieved by microprocessor Z80. WHen word 1000 is transferred, the subroutine instruction in the Z80 microprocessor detects the situation and terminates this loop.

In the meantime, other command instructions or programmed data can be chained in subsequent location of RAM 10 for ultimate access and control by the microprocessor Z80, with only one address in the RAM 10 having been utilised to transfer a large block of information. In the example, up to 1000 words were transferred. It is well within the possibility of existing hardware that up to 32 K bytes (K = 1024) of information can be transferred through the RAM 10 as it currently exists. If a two-byte word configuration is utilised, this transfer permits up to 32 K 16-bit words to be transferred without problem. The words are transferred in sequence (or consecutive order) from the V70 memory to the controller memory, using only one address in the RAM 10.

This capability can be extended by using a deeper RAM. In the present example, the RAM 10 has a 16-word depth, and up to 15 additional commands can be chained in RAM 10 without causing an overlay on the address in question. If the RAM 10 were constructed to be 32 words deep, an additional 31 commands could be chained without causing any overlap or overlay of instructions or commands.

With the aid of the described embodiment, it is easily possible to transfer enough information from a computer through the microprocessor controller to a floppy disc controller apparatus, to permit several sectors of information to be transferred conveniently and without information loss. How the present invention may be incorporated into a bi-directional information transfer interface is discussed in the copending European patent application by the present applicants, entitled Digital Data Transfer Apparatus (inventors; A. K. Fung and R. G. Mintzlaff), and lies outside the scope of the present description.

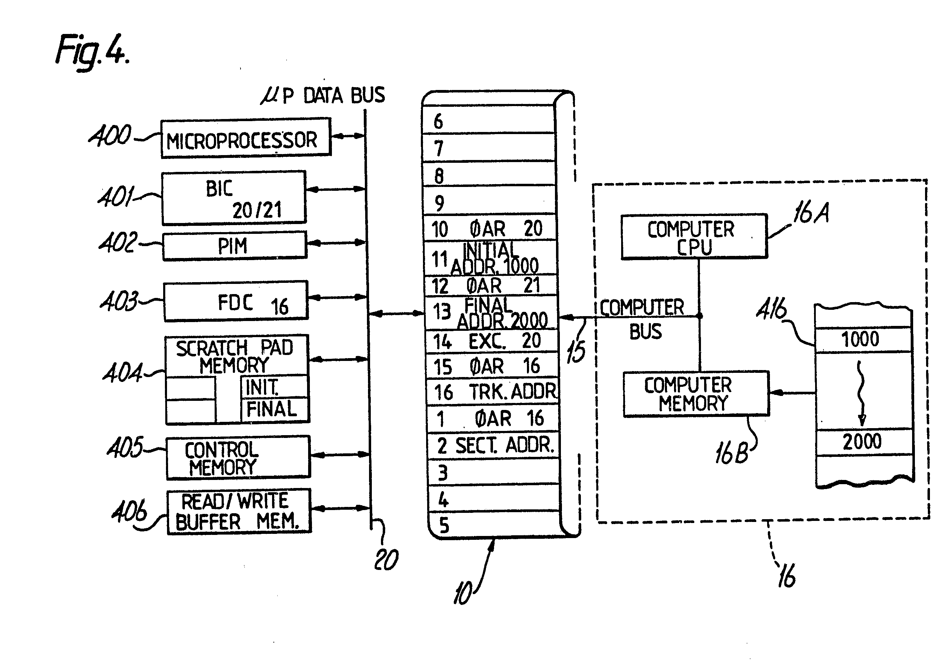

Another distinct advantage of the system architecture as shown and described herein is the ability of the system to "chain" both data and commands in any sequence including interspersed data and commands. Referring to Figure 4. there is shown a memory map and block diagram representation of the operation. In this representation, computer 16 is shown to include the computer 16 CPU 16A and the computer memory 16B. These portions of computer 16 (enclosed in the dashed outline) are connected to the RAM 10 along the data and control bus 15 as shown in Figure 1. In Figure 4, the RAM 10 is illustrated as a continuous or scrolling-type memory to convey the concept of a circular queue. Inasmuch as the RAM 10 has previously been described as being sixteen words deep, a RAM 10 with sixteen memory cells or addresses is depicted. The circular queue effect enables the memory to have information (i.e., data or addresses) continuously placed in its memory cells. In point of fact, the operation of computer 16 is such that its information output, along bus 15, is substantially continuous. The information which is provided to the RAM 10 is, then, continuously inserted into the next available RAM cell or address, unaffected by the operation of other portions of the circuit.

In addition, the RAM 10 is connected to place its output on the data bus 20, which in this embodiment is a bi-directional data bus. This bus will accept information from the RAM 10 irrespective of whether it is data, address information, a command or the like. The information on bus 20 is applied to microprocessor 400 for operation. In the illustrative example, the information on bus 20 is also supplied to a BIC (Buffer Interlace Controller) and to a PIM (Priority Interrupt Module). The BIC and/or PIM components may either be separate and distinct circuits of a stand-alone nature, or be incorporated into the microprocessor chip. It is possible to implement the BIC and PIM functions in terms of firmware in the microprocessor 400.

The bus 20 also supplies information to floppy disc controller 403 (FDC), to scratch pad memory 404, to control memory 405, and to the Read Write buffer memory 406. Again, the control, scratch and/or buffer memories may be separate, stand-alone items, or be incorporated into the microprocessor 400. The theory of operation, may, perhaps, be explained best with the aid of an example: a page 416 of information, beginning at address 1000 and terminating at address 2000, is to be transferred from computer memory 16B to Read Write buffer memory 406.

In effecting the transfer, the computer 16 provides to the bus 15 an instruction from the CPU 16A, that causes a command to be fetched from the computer memory 16B and supplied to the RAM 10 via the bus 15. In the illustration, the command OAR 20 (output from A register) is supplied to, and stored in, location 10 in the RAM 10. This command, essentially, enables BIC 401 to recognise that its device address (i.e., the device address 20), has been selected by the PROM 18 and the MUX 17, and that further activity will be forthcoming. Next, the computer 16 applies the initial address of memory area 416 to be transferred (i.e., the address 1000). This address is stored in location 11 in the RAM 10 (via computer bus 15). This address information is also supplied along the microprocessor bus 20, and the microprocessor 400, under control of control memory 405, stores the initial address in scratch pad memory 404 in the block identified as INIT. The scratch pad memory 404 in the block identified as INIT. The scratch pad memory 404 begins to "build-a task" which will be performed. Next the computer 16 applies the command OAR 21 which is stored in location 12 in RAM 10. This command, essentially, enables BIC 401 to recognise its device address has been selected, and that the final address information is forthcoming. The computer 16 then supplies the final address of the memory area or page 416, which is stored in the RAM location 13. Again, the microprocessor has informed the BIC 401 that the final address is being presented to the "BIC portion" of the scratch pad memory 404 is enabled to receive the final address information. Thus, the BIC task has now been built in the BIC portion of the scratch pad 404. That is, the initial and final addresses have been stored as a result of the application of EXC 20 (external command 20) command from the computer 16. However, the information from page 416 is not yet transferred from the computer memory 16B to the read/write buffer memory 406. Rather, the next command from the computer 16 is the OAR 16 command which, under the control of the microprocessor 400, selected the floppy disc controller 403, the address of which is 16. The controller 403 is now activated, and the command "track address" (TRK ADDR) which had been stored in the RAM location 16, is now transferred to the floppy disc controller 403 and causes the controller to produce a track-seek operation on the floppy disc apparatus. The BIC task which has previously been built in the scratch pad memory 404 is effectively suspended at this time. Next, the computer 16 produces the command OAR 16 which again selects the floppy disc controller 16. The computer than supplies the command "sector address" (SECT ADDR) which is stored in RAM location 2, and which is now supplied to the floppy disc controller 403 to select the appropriate sector of the previously selected track. The operation of the computer in supplying data and/or commands in a chained fashion can be continued merely through the operation of the RAM access counter 13 which provides a pointer to sequentially select the next available location. In the meantime, the RAM address holding register 12 also supplies a pointer, from the microprocessor 400, which selects the operation which is being undertaken. Thus, while computer 16 is supplying the various commands and/or data information noted above to the location 2 of the RAM 10, the microprocessor is executing in accordance with these commands and/or data in its fashion by applying a pointer via the bus 20. In the illustration given, after the computer 16 has supplied the sector address to the RAM location 2, the computer can continue to supply other commands and/or data to the next RAM locations in sequence. If it is assumed that the microprocessor pointer has continuously followed along the RAM locations, and that the microprocessor has performed the operations as instructed then, when the microprocessor pointer reaches the RAM location 2 and the sector address is obtained, the control memory 405 will indicate that the transfer of information in accordance with the previously described BIC task should now be implemented, and the information at page 416 in the computer memory 16B will be transferred from the computer memory through to the floppy disc, using only that RAM location which was most recently involved as previously described with respect to the data compression operation. Thus, it can be seen that computer 16 can be outputting commands and/or data to the RAM 10, in which the plurality of commands and/or data can be chained in any suitable fashion. These commands and/or data are then removed by the microprocessor 400 along the bus 20 and the appropriate operations are carried out. Moreover, in the given example, after the command in location 10 is removed, this location can now be utilised by the computer 16 for the next command or data information. Likewise, the RAM locations 11—16, and so forth, become available. This permits the computer 16 to run substantially continuously, as the computer need not wait for the external controllers of devices to perform a function before the computer can move on to the next operation. This permits extraordinarily rapid computer operation without any significant restrictions on the operations of peripheral devices.

To appreciate this, it must be understood that a plurality of tasks can be built of stored in the scratch pad memory 404 for subsequent operation under the control of microprocessor 400 and control memory 405 which can interface better with the relatively slow output or peripheral devices such as a floppy disc unit. Thus, the computer 16 can produce, at its relatively high speed, tasks which can be performed by a plurality of peripheral devices, without having to wait for any one of these peripheral devices to complete its tasks. Instead, the relatively slow output devices can function in their own real time under the control of microprocessor 400.

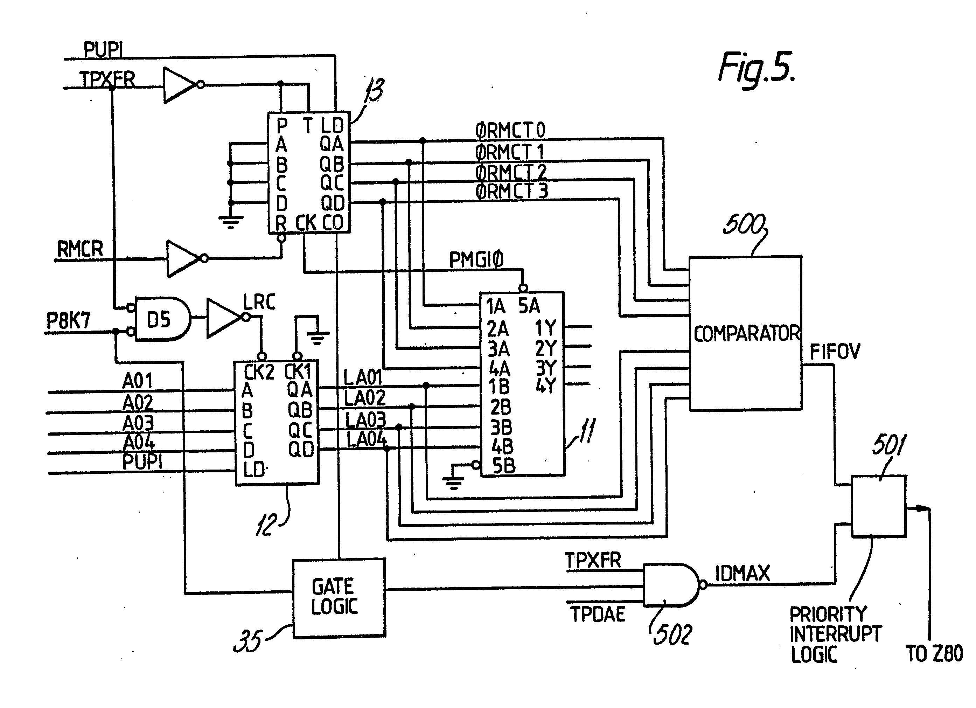

Figure 5 shows an alternative circuit arrangement which can be utilised in the instant invention. Initially, it should be noted that the circuitry shown in Figure 2 is directed to an operation in which only a limited number of tasks (e.g., two) can be built in the scratch pad memory 404 for any particular controller, if the transfer of DMA data is involved. That is, when a DMA task has been built in the scratch pad memory and the transfer started, Nand gates are activated and the microprocessor 12 as well as MUX 11 are effectively disabled and no additional operations can be undertaken, nor can any additional commands and/or data be transferred from the computer 16. However, in the embodiment shown in Figure 5, the Nand gate is removed, and the multiplexer MUX 11 is not disabled when the DMA task has been built in the scratch pad memory 404. Rather, in this embodiment, the output terminals of access counter 13 and the output terminals of address-holding register 12 are supplied to a comparator 500. This comparator 500 operates to produce a selective control signal to indicate whether the output signals from the counter 13 and the register 12 are identical. An identity indicates that the computer 16 is attempting to supply information (command or data) into the same RAM location which the microprocessor is attempting to read. In other words, computer 16 has "lapped" the microprocessor and is attempting to overlay new information in an old location which has not yet been fully utilised by the microprocessor. Appropriate control signals are provided from the gate-logic to assure that the circuitry is properly interrogated. The signals are then supplied to the microprocessor priority interrupt logic 501 which prevents the supply of additional information to the RAM 10. Conversely, the priority interrupt can be utilized to inform the microprocessor that erroneous DMA data is being operated upon, and that appropriate action must be taken to retrieve the correct information from the memory of the computer 16. This involves retransferring the last data by means of the DMA logic in the same manner as previously described in relation to the dual-port memory operation. The coincidence of the computer 16 attempting to write the same location of the RAM 10 which the microprocessor 400 is reading, will be quite infrequent, and performance will, in general, not be greatly affected. At the same time, other activities can take place. For example, with the system shown and described herein, the advantage of look-ahead and look-backward operation is possible. That is, while the FDC is carrying out a particular function, such as a track seek, a sector-search or the like, the microprocessor can be operating to look forward through the RAM contents to determine if other tasks of this nature are to be carried out. Thus, another FDC operation can be observed, stored and a task built. In the particular embodiment disclosed herein, it is typical that one additional task for any particular device is noted and stored. Of course, other devices such as additional FDCs or the like can have additional tasks assembled and stored in the scratch pad memory 404. Inasmuch as the memory is, effectively, a circular queue, a continuous probing of the RAM 10 has also the effect of establishing a look-backward approach.

**Claims**

1. A digital information transfer system including an information supply apparatus (16) coupled to an information receiving apparatus ($\mu_p$, 400 to 406) by an interface which comprises a random access memory (10) capable of storing a mixed chain of data and function information words, and first and second random access memory addressing circuits (13, 12) which are controlled, respectively, by the information supply apparatus (16) and the information receiving apparatus ($\mu_p$, 400 to 406), characterised in that the interface is provided with a switching circuit (11) for selective connection of either the first or the second memory addressing circuit (13, 12) to the random access memory (10), and is operable in one mode in which the switching circuit (11) connects the first memory addressing circuit (13) for input and storing of information words from the information supply apparatus (16), and in which the first memory addressing circuit addresses a different random access memory location for each word input under the control of the information supply apparatus (16), and in which the switching circuit (11) connects the second memory addressing circuit (12) for subsequent output of each stored word to, and under the control of, the information receiving apparatus ($\mu_p$, 400 to 406); and in another mode in which the switching circuit (11) connects the second memory addressing circuit (12) to the random access memory (10) for sequential throughput of a plurality of data information words from the information supply apparatus (16) to the information receiving apparatus ($\mu_p$, 400 to 406), and in which the second memory addressing circuit (12) addresses the same location repeatedly.

2. A system as claimed in claim 1 in which the first memory addressing circuit (13) is a counter which, in response to a control signal, consecutively advances the memory input address in the manner of a circular queue, and in which the second memory addressing circuit (12) is a register capable of storing a memory address for the repeated addressing of the same location.

3. A system as claimed in claim 1 or claim 2 in which the information supply apparatus is a relatively high speed computer (16), in which the information receiving apparatus includes a relatively low speed microprocessor ($\mu_p$, 400) which controls the second memory addressing circuit (12, and in which the interface (10 to 16, 17 to 19) is located between the computer bus (15) and the microprocessor bus (20, 21, 22).

4. A system as claimed in claim 3, in which the microprocessor ($\mu_p$, 400) controls the transfer of information through the random access memory (10) between the computer (16) and one or more peripheral devices (401 to 406) thereof.

5. A system as claimed in claim 4 in which execution of microprocessor instructions causes function or data information output from the random access memory (10) onto the microprocessor data bus (20) for retrieval therefrom by a sselected receiving device (401 to 406).

6. An information transfer system as claimed in claim 4 or claim 5, in which the interface (10 to 14, 16 to 19) operates in said other mode to provide direct memory access (DMA) data transfer.

7. An information transfer system as claimed in any preceding claim, in which the memory (10) receives a specified number of digits of each word of information directly, and in which the remaining digits are supplied via an input information translation circuit (17, 18, 19).

8. An information transfer system as claimed in claim 7, in which the input information translation circuit (17, 18, 19) includes a programmable read-only memory (18) to translate received device address digits into said remaining digits supplied to the memory (10).

9. An information transfer system as claimed in claim 7 or claim 8, in which the translation circuit (17, 18, 19) includes means (17) responsive to a control signal (DRY/FRY) indicative of wiether a supplied input word defines data or a function, and is arranged to select said remaining digits accordingly.

10. An information transfer system as claimed in any preceding claim, in which the switching circuit (11) is arranged to select the first memory addressing circuit (13) in response to a control signal received from the information supply apparatus (16).

**Revendications**

1. Système de transfert d'informations numériques incluant un appareil d'alimentation d'information (16) couplé à un appareil de réception d'information ($\mu_p$, 400 à 406) par une interface qui comprend une mémoire à accès direct (10) capable de conserver une chaîne mélangée de mots d'information de fonction et de donnée, et un premier et un second circuits d'adressage de mémoire à accès direct (13, 12) qui sont commandés respectivement par l'appareil d'alimentation d'information (16) et par l'appareil de réception d'information ($\mu_p$, 400 à 406), caractérisé en ce que l'interface est pourvue d'un circuit de commutation (11) pour une connexion sélective soit du premier, soit du second circuits d'adresse de mémoire (13, 12) à la mémoire à accès direct (10), et qui peut opèrer dans un premier mode dans lequel le circuit de commutation (11) connecte le premier circuit d'adressage de mémoire (13) pour entrer et conserver des mots d'information de l'appareil d'alimentation d'information (16) et dans lequel le premier circuit d'adressage de mémoire adresse un emplacement de mémoire à accès direct différent pour chaque mot d'entrée sous la commande de l'appareil d'alimentation d'information (16), et dans lequel le circuit de commutation (11) connecte le second circuit d'adressage de mémoire (12) pour une délivrance subséquente de chaque mot conservé à et sous le command de l'appareil de réception d'information ($\mu_p$, 400 à 406); et dans une autre mode dans lequel le circuit de commutation (11) connecte le second circuit d'adressage de mémoire (12) à la mémoire à accès direct (10) pour le passage séquentiel d'un certain nombre de mots de donnée d'information provenant de l'appareil d'alimentation d'information (16) à l'appareil de réception d'information ($\mu_p$, 400 à 406), et dans lequel le second circuit d'adressage de mémoire (12) adresse de façon répétée le même emplacement.

2. Système selon la revendication 1 dans lequel le premier circuit d'adressage de mémoire (13) est un compteur qui, en réponse à un signal de commande, avance consécutivement l'adresse d'entrée de mémoire à la manière d'une queue ou d'une file circulaire et où le second circuit d'adressage de mémoire (12) est un registre capable de conserver une adresse de mémoire pour l'adressage répétée du même emplacement.

3. Système selon la revendication 1 ou 2, dans lequel l'appareil d'alimentation d'information est un ordinateur à vitesse relativement élévée (16), dans lequel l'appareil de réception d'information comprend un microprocesseur relativement lent ($\mu_p$, 400) qui commande le circuit d'adressage de mémoire (12), et où l'interface (10 à 16, 17 à 19) est située entre le câble (15) de l'ordinateur et la câble (20, 21, 22) du microprocesseur.

4. Système selon la revendication 3, dans lequel le microprocesseur ($\mu_p$, 400) commande le transfert des informations à travers la mémoire à accès direct (10) entre l'ordinateur (16) et un ou plusieurs dispositifs périphériques (401 à 406) de celui-ci.

5. Système selon la revendication 4, dans lequel l'exécution des instructions du microprocesseur provoque la sortie d'information de fonction ou de donnée de la mémoire à accès direct sur le câble de donnée (20) du microprocesseur aux fins de récupération par le dispositif de réception sélectionné (401 à 406).

6. Système de transfert d'informations selon la revendication 4 ou 5, dans lequel l'interface (10 à 14, 16 à 19) opère dans ledit autre mode afin de produire un transfert de données à la mémoire à accès direct (DMA).

7. Système de transfert d'informations selon l'une quelconque des revendications précédentes, dans lequel la mémoire (10) reçoit un nombre spécifié de chiffres de chaque mot d'information directement et dans lequel les chiffres restants sont fournis via un circuit de traduction d'information d'entrée (17, 18, 19).

8. Système de transfert d'informations selon la revendication 7, dans lequel le circuit de traduction d'informations d'entrée (17, 18, 19) comprend une mémoire fixe programmable (18) afin de traduire les chiffres d'adresse de dispositif reçus en lesdits chiffres restants fournis à la mémoire (10).

9. Système de transfert d'informations selon la revendication 7 ou 8, dans lequel le circuit de traduction (17, 18, 19) comprend des moyens (17) répondant à un signal de commande (DRY/FRY) indiquant si le mot d'entrée fourni définit une donnée ou une fonction, et qui est arrangé pour sélectionner lesdits chiffres restant en conséquence.

10. Système de transfert d'informations selon l'une quelconque des revendications précédentes, dans lequel le circuit de commutation (11) est arrangé pour sélectionner le premier circuit d'adresse de mémoire (13) en réponse à un signal de commande reçu de l'appareil d'alimentation d'information (16).

## Patentansprüche

1. Übertragungssystem für digitale Informationen mit einer die Informationen liefernden Einrichtung (16), die mit einer die Informationen empfangenden Einrichtung ($\mu_p$, 400 bis 406) über eine Zwischeneinheit verbunden ist, die zur Aufbewahrung einer gemischten Reihe von Daten- und Funktionswörtern einen Speicher (10) für willkürlichen Zugriff und zwei diesen adressierende Schaltungen (13, 12) aufweist, die jeweils von der die Informationen liefernden Einrichtung (16) bzw. der die Informationen empfangenden Einrichtung ($\mu_p$, 400 bis 406) besteuert werden, dadurch gekennzeichnet, daß die Zwischeneinheit zum Anschluß der einen oder anderen adressierende Schaltung (13, 12) an den Speicher (10) für willkürlichen Zugriff mit einem Schaltkreis (11) versehen und entweder in der einen Art wirksam ist, daß nämlich der Schaltkreis (11) die erste adressierende Schaltung (13) zur Eingabe und Speicherung der Wörter aus der die Informationen liefernden Einrichtung (16) anschließt, wobei unter der Steuerung der die Informationen liefernden Einrichtung (16) die erste adressierende Schaltung bei jedem eingegebenen Wort einen unterschiedlichen Platz im Speicher für willkürlichen Zugriff adressiert, und daß der Schaltkreis (11) die zweite adressierende Schaltung (12) für eine nachfolgenden Ausgabe jedes gespeicherten Wortes an die die information empfangenden Einrichtung ($\mu_p$, 400 bis 406) unter deren Steuerung anschließt, oder in der anderen Art wirksam ist, daß nämlich der Schaltkreis (11) die zweite adressierende Schaltung (12) mit dem Speicher (10) zum nachfolgenden Durchlassen mehrerer Wörter aus der die Informationen liefernden Einrichtung zu der die Informationen empfangenden Einrichtung ($\mu_p$, 400 bis 406) verbindet, wobei die zweite adressierende Schaltung (12) wiederholt denselben Platz adressiert.

2. System, wir in Anspruch 1 beansprucht, bei dem die erste adressierende Schaltung (13) ein Zähler ist, der aud ein Steuersignal hin die Eingabeadresse des Speichers nacheinander zyklisch weiterschaltet, und bei dem die zweite adressierende Schaltung (12) ein Register zur Aufbewahrung einer Speicheradresse für die wiederholte Adressierung desselben Platzes ist.

3. System, wie in Anspruch 1 oder Anspruch 2, beansprucht, bei dem die die Informationen liefernde Einrichtung eine mit ziemlich hoher geschwindigkeit arbeitenden Rechenanlage (16) ist, bei dem die die Informationen empfangende Einrichtung einen mit ziemlich geringer Geschwindigkeit arbeitenden Mikroprozessor ($\mu_p$, 400) enthält, der die zweite adressierende Schaltung (12) steuert, und bei dem die Zwischeneinheit (10 bis 16, 17 bis 19) zwischen der Schiene (15) der Rechenanlage und der Schiene (20, 21, 22) der Mikroprozessors angeordnet ist.

4. System, wie in Anspruch 3 beansprucht, bei dem der Mikroprozessor ($\mu_p$, 400) die Informationsübertragung zwischen der Rechenanlage (16) und einem oder mehreren peripheren Geräten (401 bis 406) über den Speicher (10) für willkürlichen Zugriff steuert.

5. System, wie in Anspruch 4 beansprucht, bie dem die Ausführung von Mikroprozessor-Befehlen eine Ausgabe von Funktionsanweisungen oder Daten aus dem Speicher (10) fur willkürlichen Zugriff auf die Datenschiene (20) des Mikroprozessors zu deren Gewinnung durch ein gewähltes ampfangendes Gerät (401 bis 406) bewirkt.

6. Informations-Übertragungssystem, wie in Anspruch 4 oder Anspruch 5, beansprucht, bei dem die Zwischeneinheit (10 bis 14, 16 bis 19) in der anderen Art arbeitet, um eine Datenübertragung bei direktem Speicherzugriff vorzusehen.

7. Informations-Ubertragungssystem, wie in einem vorhergehenden Anspruch beansprucht, bei dem der Speicher (10) eine vorgeschriebene Anzahl Digits jedes Informationswortes direkt empfängt, und bei dem die übrigen Digits über eine Umsetzer-Eingabeschaltung (17, 18, 19) zugeführt werden.

8. Informations-Übertragungssystem, wie in Anspruch 7 beansprucht, bei dem die Umsetzer-Eingabeschaltung (17, 18, 19) einen programmierbaren, nur dem Auslesen dienenden Speicher (18) enthält, um die empfangenen Digits einer Geräte-Adresse in die übrigen dem Speicher (10) augeführten Digits umzusetzen.

9. Informations-Übertragungsystem, wie in Anspruch 7 oder Anspruch 8, beansprucht, bei dem die Umsetzerschaltung (17, 18, 19) ein Hilfsmittel (17) aufweist, das auf ein Steuersignal (DRY/FRY) hin zwecks Anzeige) anspricht, ob ein zugeführtes wort der Eingabe Daten oder eine Funktion festsetzt, und so angeordnet ist, daß dementspechend die übrigen Digits gewählt werden.

10. Informations-Übertragungssystem, wie in einem vorhergehenden Anspruch beansprucht, bei dem der Schaltkreis (11) so angeordnet ist, daß die erste Adressierschaltung (13) in Abhängigkeit von einem Steuersignal angewählt wird, das aus der die Informationen liefernden Einrichtung (16) empfangen ist.

Fig.1.

Fig.2.

0 026 649

Fig.3.

FROM BUS 15

E00
E01
E02
E03
E04
E05

A0
A1 PROM
A2
A3
A4
A5
A6
A7
CE1
CE2

O1
O2
O3
O4

18

IUAX

FRYX

DDA
DA
DDA0
DDA1

25

CLK
1D
2D
3D
4D
REG
CLR

1Q
1Q̄
2Q
2Q̄
3Q̄
3Q
4Q̄
4Q

TDAI+
TDAI−

19

SW0
SW1

DA

PUPI

+5V

1A
2A
3A
4A
1B
2B
3B
4B
5A
MUX

1Y
2Y
3Y
4Y

DVDA1
DVDA2
DVDA3

TDA2

TPVD0

17

0 026 649

**Fig.4.**

Fig.5.